# EUROPEAN PATENT SPECIFICATION

(11) **EP 2 720 533 B1**
(45) Date of publication and mention of the grant of the patent: **22.01.2020**
(21) Application number: 12801017.0
(22) Date of filing: 05.06.2012
(51) Int. Cl.: A23K 50/30, A23K 10/40, A23K 20/20

(54) **STIMULATION DEVICE**
STIMULATIONSVORRICHTUNG
DISPOSITIF DE STIMULATION

(30) Priority: 17.06.2011 FI 20115622
(43) Date of publication of application: 23.04.2014
(73) Proprietor: Viholainen, Esko, 14200 Turenki (FI)
(72) Inventor: Viholainen, Esko, 14200 Turenki (FI)
(74) Representative: LEITZINGER OY
(86) International application number: PCT/FI2012/050556
(87) International publication number: WO 2012/172165

(56) References cited:
- EP-A2- 0 467 855
- WO-A1-2006/017546
- WO-A1-2006/017546
- WO-A1-2010/032096
- CN-A- 1 144 799
- DE-U1- 20 118 268
- DK-U3- 200 000 230
- FR-A1- 2 047 878
- FR-A1- 2 047 878
- RU-C1- 2 335 123
- US-A- 4 182 755
- US-A- 6 120 815
- WILDEUS ET AL: "Growth, intake, diet digestibility, and nitrogen use in three hair sheep breeds fed alfalfa hay", SMALL RUMINANT RESEARCH, ELSEVIER, AMSTERDAM, NL, vol. 69, no. 1-3, 8 March 2007 (2007-03-08), pages 221-227, XP005918165, ISSN: 0921-4488, DOI: 10.1016/J.SMALLRUMRES.2005.12.016
- JENSEN ET AL: "The value assigned to six different rooting materials by growing pigs", APPLIED ANIMAL BEHAVIOUR SCIENCE, ELSEVIER SCIENCE PUBLISHERS BV., AMSTERDAM, NL, vol. 108, no. 1-2, 26 October 2007 (2007-10-26), pages 31-44, XP022315118, ISSN: 0168-1591, DOI: 10.1016/J.APPLANIM.2006.10.014

## Description

The invention relates to a stimulation device in a piggery wherein the device is for use in a method of preventing or terminating tail biting in pigs, the stimulation device being made of natural fibers and is fixed to the ceiling or the stall structure of the piggery by a fixing member for keeping the stimulation device in place regardless of the pull caused by the pigs. The present invention relates also to the use of a solution to be used in the stimulation device for preventing tail biting in pigs, the use of the stimulation device and a method for manufacturing the stimulation device. The present invention is defined in scope by the claims.

Production animals, especially pigs, often show harmful disruptive behaviour which is directed at other animals living on the same premises. In this connection, disruptive behaviour refers to cannibalism which, for example with pigs, manifests itself as tail biting.

In pigs, the behavioural disorder appears especially as tail biting, which is common in piggeries where pigs are bred for meat production. Symptoms of cannibalism may also appear as biting of ears and flanks. Tail biting occurs from time to time in all breeding piggeries. The number of individuals subjected to tail biting generally varies between 10 to 20 per cent. The behavioural disorder incurs considerable financial losses to production and is a significant welfare problem to pigs.

From the document FR2047878 A1 it is known a composition that includes ammonium chloride and which is used as a solution for preventing aggressive pecking behaviours in poultry.

In the document US4182755 A it is described a composition which includes ammonium chloride and which is used to decrease the feed intake in pigs.

From the document "Growth, intake, diet digestibility and nitrogen use in three hair sheep breeds fed alfalfa hay" (Wildeus, S. et al.) it is known to add ammonium chloride into the salt lick.

In the document US6120815 A it is disclosed use of ammonium chloride in the animal feed that is used for prevention of parturient paresis.

In the document WO2006/017546 A1 it is disclosed a feed supplement that includes ammonium chloride.

In the document "The value assigned to six different rooting materials by growing pigs" (Jensen, Pedersen) a preferences of different rooting materials is disclosed.

One embodiment of the document WO2010/032096A1 describes the use of ammonium chloride as a palatant. The palatant according to the publication is intended to increase the consumption of the feed by pigs and hence the growth of pigs.

None of the above mentioned documents discloses a stimulation device that is made of natural fibres and is fixed to the ceiling or the stall structure of the piggery by a fixing member for keeping the stimulation device in place regardless of the pull caused by the pigs, and is used to prevent or stop tail biting in pigs.

The aim of the invention is to provide a device by means of which this type of disruptive behaviour in pigs can be prevented. In this connection prevention refers to both the prevention of disruptive behaviour in advance and the termination of disruptive behaviour that has already started.

To achieve this aim, the stimulation device according to the invention is characterised in that the stimulation device contains ammonium chloride which is absorbed into the stimulation device from a solution where it is present at 50-375 g/l of water.

The device according to the invention complies with the natural behaviour of production animals and at the same time acts as a stimulating toy for the animals.

Tests carried out on pigs have shown that bringing a stimulation device within the reach of the pigs rapidly stops tail biting. The supposition is that the strong taste sensed in the mouth when biting the stimulation device will prevent the need to bite other pigs. A more specific effectiveness mechanism can be found out through further study.

A further aim of the invention is to provide the use of a solution to be used in the stimulation device for preventing or terminating tail biting in pigs (claim 5), a method for manufacturing the stimulation device (claim 9), and the use of the stimulation device (claim 8).

The stimulation device is made of natural fibers. According to one embodiment of the invention, the stimulation device is made of string. More preferably, the stimulation device is made of sisal string. The diameter of the sisal string is preferably within the range 10-18 mm; the diameter is more preferably about 14 mm.

A stimulation device made of sisal string with a diameter of about 14 mm contains ammonium chloride preferably in an amount of 3-30 g/m of string. Most preferably, the sisal string with a diameter of 14 mm contains about 15 g of ammonium chloride/m.

The solution used according to the invention is characterised in that it contains 50-375 g of ammonium chloride per a litre of water.

According to an extremely advantageous embodiment, the solution contains about 300 g of ammonium chloride/I of water.

The solution used according to the invention preferably also contains at least one binder, such as table salt, granulated sugar and/or monosodium glutamate.

The solution used according to the invention is colourless. In one embodiment, the solution used according to the invention optionally contains colouring agent, in which case it is easier for the user to observe the absorption of the solution into the stimulation device.

The method according to the invention is, on the other hand, characterised in that a solution containing ammonium chloride having an ammonium chloride content of 50-375 g/l is absorbed into the stimulation device. It is particularly advantageous when the amount of ammonium chloride in the solution used in the method according to the invention is about 300 g/l of water.

The invention is described in greater detail in the following in an exemplary manner.

### A stimulation device for pigs

The stimulation device according to the invention is arranged within the reach of pigs in their living space, such as a stall or outdoor pen, in such a way that they will be able to bite it if they wish. The stimulation device can be fixed, for example, to the ceiling or the stall structures. The stimulation device can be fastened directly by tying to the stall structures or it may be attached, for example, to a ceiling hook fixed to the ceiling or a metal chain placed to hang from the stall fence. By moving the ceiling hook from one loop of the metal chain to another, the distance between the stimulation device and the floor can be adjusted. The fixing member is preferably made of a strong material, such as metal, plastic and/or other similar material, which is sufficiently durable for keeping the stimulation device in place regardless of the pull caused by the animals.

As material for the stimulation device is used a natural fibre which, when intertwined, and/or otherwise bound together withstand sufficiently biting by the animals and into which it is possible to absorb a sufficient amount of the ammonium chloride (NH₄Cl) solution according to the invention.

The stimulation device is made of natural fibres.

In a preferred embodiment of the invention, the stimulation device is made of intertwined sisal string into which ammonium chloride solution according to the invention is stored by absorption. The diameter of the sisal string is preferably about 10-18 mm.

It has been noted in preliminary tests that sisal string with a diameter of 14 mm is optimal regarding both the amount of solution absorbed and the resistance to biting. In these tests has further been found that the amount of ammonium chloride in 14 mm sisal string is within the range 3-30 g/m of string in order to have a preventive effect on the tail biting by the pigs. The preferred amount of ammonium chloride is 10-20 g/m. Preliminary observations show that the most preferable amount of ammonium chloride in sisal string with a 14 mm diameter is 15 g/m. The optimal amount of ammonium chloride can be discovered by further tests.

A further purpose of the string is to prevent excessive and too rapid obtaining of flavouring from the stimulation device, because ammonium chloride is harmful when swallowed in large amounts. This functions because the string cannot be devoured, but must be chewed to pieces, which takes time. Excessive dosages can also be avoided by giving only a certain measure of string/day/pig.

With other materials, for example cotton-based materials, the optimal size can be discovered through testing.

It is known that the solubility of ammonium chloride in water is highly dependent on temperature. Preliminary tests have shown that a concentration of the solution for achieving the effect according to the invention is within the range 50-375 g of ammonium chloride/1 l of water. The preferable amount of ammonium chloride is within the range 200-330 g/l. To prevent the tail biting by pigs, according to preliminary tests, the most preferable amount of ammonium chloride per a litre of water is about 300 g. Further tests can be carried out to discover the optimal concentration of the solution for different stimulation devices.

The effect of the stimulation device is best when it contains as large an amount of ammonium chloride as possible. This is achieved preferably by dipping the device in the solution twice or more and drying the device between absorptions.

Crystallized ammonium chloride detaching from the stimulation device may irritate the eyes and respiratory organs of the animals. The solution according to the invention, therefore, preferably contains a binder by means of which ammonium crystallizing on the surface of the device is prevented from dropping off, for example, when unwinding the rope coil and/or when the pigs bite the string. As binder can preferably be used, for example, table salt and/or granulated sugar. The solution preferably contains about 100 g of table salt/I of water and/or about 100 g of granulated sugar/l of water.

To the solution according to the invention may optionally be added colouring agent, which may be, for example, a food dye approved for production animals. The amount of colouring agent is preferably such that it is able to indicate that a sufficient amount of the solution according to the invention has been absorbed by the stimulation device. Colouring agents in different colours can in addition be used as markers to indicate the concentration and/or different composition of the solution.

It is also possible to add, for example, flavour enhancers such as monosodium glutamate to the solution. Adding flavour enhancers might make it possible to reduce the amount of ammonium chloride or, alternatively, it could be used to strengthen the taste experience provided by the ammonium chloride. Monosodium glutamate can in addition act as a binder in the solution to prevent the detachment of the crystallized ammonium chloride on the surface of the string.

## Claims

1. A stimulation device in a piggery, wherein the device is for use in a method of preventing or terminating tail biting in pigs, the stimulation device being made of natural fibers and is fixed to the ceiling or the stall structure of the piggery by a fixing member for keeping the stimulation device in place regardless of the pull caused by the pigs, **characterized in that** the stimulation device contains ammonium chloride which is absorbed into the stimulation device from a solution where it is present at 50-375 g/l of water.

2. A stimulation device as claimed in claim 1, **characterised in that** the device is made of string.

3. A stimulation device as claimed in claim 2, **characterised in that** the string is sisal string with a diameter within the range of about 10-18 mm.

4. A stimulation device as claimed in claim 3, **characterised in that** it contains ammonium chloride in an amount of 3-30 g/m of string.

5. The use of a solution containing 50-375 g of ammonium chloride/l of water in a stimulation device according to claim 1.

6. The use of a solution as claimed in claim 5, the solution also containing at least one binder selected from a group including table salt, granulated sugar and monosodium glutamate.

7. The use as claimed in any of the claims 5 or 6, the solution optionally containing a colouring agent.

8. The use of a stimulation device as claimed in any of the claims 1 to 4 in a method of preventing or terminating tail biting in pigs, the stimulation device being provided within the reach of the pigs in their living space.

9. A method for manufacturing a stimulation device as claimed in any of the claims 1 to 4, **characterised in that** a solution containing ammonium chloride having an ammonium chloride content within the range 50-375 g/l of water is absorbed into the stimulation device, the device being used in a method of preventing or terminating tail biting in pigs.

## Patentansprüche

1. Stimulationsvorrichtung in einem Schweinemastbetrieb, wobei die Vorrichtung zur Verwendung in einem Verfahren zum Verhindern oder Beenden des Schwanzbeißens bei Schweinen dient, wobei die Stimulationsvorrichtung aus Naturfasern gefertigt ist und an der Decke oder der Stallabteilkonstruktion des Schweinemastbetriebes mit einem Befestigungselement befestigt ist, damit die Stimulationsvorrichtung an ihrer Stelle gehalten wird, obwohl die Schweine daran ziehen, **dadurch gekennzeichnet, dass** die Stimulationsvorrichtung Ammoniumchlorid enthält, das aus einer Lösung, in der es mit 50 bis 375 g/l Wasser vorliegt, in die Stimulationsvorrichtung aufgesaugt wird.

2. Stimulationsvorrichtung nach Anspruch 1, **dadurch gekennzeichnet, dass** die Vorrichtung aus Schnur gefertigt ist.

3. Stimulationsvorrichtung nach Anspruch 2, **dadurch gekennzeichnet, dass** die Schnur Sisalschnur mit einem Durchmesser im Bereich von ungefähr 10 bis 18 mm ist.

4. Stimulationsvorrichtung nach Anspruch 3, **dadurch gekennzeichnet, dass** sie Ammoniumchlorid in einer Menge von 3 bis 30 g/m Schnur enthält.

5. Verwendung einer Lösung, die 50 bis 375 g Ammoniumchlorid/I Wasser in einer Stimulationsvorrichtung nach Anspruch 1 enthält.

6. Verwendung einer Lösung nach Anspruch 5, wobei die Lösung auch mindestens ein Bindemittel enthält, das aus einer Gruppe umfassend Speisesalz, Kristallzucker und Mononatriumglutamat ausgewählt ist.

7. Verwendung nach einem der Ansprüche 5 oder 6, wobei die Lösung gegebenenfalls einen Farbstoff enthält.

8. Verwendung einer Stimulationsvorrichtung nach einem der Ansprüche 1 bis 4 in einem Verfahren zum Verhindern oder Beenden von Schwanzbeißen bei Schweinen, wobei die Stimulationsvorrichtung in Reichweite der Schweine in ihrem Lebensraum vorgesehen ist.

9. Verfahren zur Herstellung einer Stimulationsvorrichtung nach einem der Ansprüche 1 bis 4, **dadurch gekennzeichnet, dass** eine Ammoniumchlorid enthaltende Lösung mit einem Ammoniumchloridgehalt im Bereich von 50 bis 375 g/l Wasser in die Stimulationsvorrichtung aufgesaugt wird, wobei die Vorrichtung in einem Verfahren zum Verhindern oder Beenden von Schwanzbeißen bei Schweinen verwendet wird.

## Revendications

1. Dispositif de stimulation dans une porcherie, ce dispositif étant destiné à un usage dans un procédé visant à empêcher ou à mettre fin aux morsures de la queue chez les cochons, ce dispositif de stimulation étant composé de fibres naturelles et étant fixé au plafond ou à la structure d'étable de la porcherie par un élément de fixation pour maintenir le dispositif de stimulation en place quelle que soit la traction exercée par le cochon, **caractérisé en ce que** le dispositif de stimulation contient du chlorure d'ammonium qui est absorbé dans le dispositif de stimulation à partir d'une solution où il est présent en une quantité de 50 à 375 g/l d'eau.

2. Dispositif de stimulation selon la revendication 1, **caractérisé en ce que** le dispositif est composé de ficelle.

3. Dispositif de stimulation selon la revendication 2, **caractérisé en ce que** la ficelle est de la ficelle de sisal ayant un diamètre de l'ordre d'environ 10 à 18 mm.

4. Dispositif de stimulation selon la revendication 3, **caractérisé en ce qu'**il contient du chlorure d'ammonium en une quantité de 3 à 30 g/m de ficelle.

5. Utilisation d'une solution contenant 50 à 375 g de chlorure d'ammonium/l d'eau dans un dispositif de stimulation selon la revendication 1.

6. Utilisation d'une solution selon la revendication 5, la solution contenant aussi au moins un liant sélectionné dans un groupe comprenant le sel de table, le sucre en poudre et le glutamate de monosodium.

7. Utilisation d'une solution selon l'une quelconque des revendications 5 ou 6, la solution contenant en option un agent colorant.

8. Utilisation d'une solution selon l'une quelconque des revendications 1 à 4 dans un procédé visant à empêcher ou à mettre fin à la morsure de la queue chez les cochons, le dispositif de stimulation étant prévu à la portée des cochons dans leur espace de vie.

9. Utilisation d'une solution selon l'une quelconque des revendications 1 à 4, **caractérisé en ce qu'**une solution contenant du chlorure d'ammonium ayant un contenu de chlorure d'ammonium de l'ordre de 50 à 375 g/litre d'eau est absorbée dans le dispositif de stimulation, le dispositif étant utilisé dans un procédé visant à empêcher ou à mettre fin à la morsure de la queue chez les cochons.
